# EUROPÄISCHE PATENTANMELDUNG

(11) **EP 1 419 848 A2**
(43) Veröffentlichungstag der Anmeldung: **19.05.2004**
(21) Anmeldenummer: 03023379.5
(22) Anmeldetag: 16.10.2003
(51) Int. Cl.: B23K 37/00, B23K 26/12

(54) **Schweisseinrichtung und Verfahren zum Schweissen**

(30) Priorität: 14.11.2002 AT 17142002
(71) Anmelder: TMS Produktionssysteme GmbH, 4031 Linz (AT)
(72) Erfinder: Kallabis, Matthias, Dr., 4020 Linz (AT); Herac, Ibrisim, Prof., 4020 Linz (AT)
(74) Vertreter: VA TECH Patente GmbH & Co

(57) **Zusammenfassung**

Beim Einsatz von Laserstrahlen oder anderen gefährlichen Schweißmedien, wie z.B. bestimmte Schweißgase, zum Schweißen von Bauteilen ist es aus Sicherheitsgründen zwingender Weise gefordert eine Abschirmung vorzusehen, um sicherzustellen, dass das Schweißmedium nicht irrtümlich aus der Schweißeinrichtung austritt und eine Gefahr für Leib und Leben des Bedienpersonal darstellt. Die vorliegende Erfindung zeigt nun eine Schweißeinrichtung 1, mit der das Nachaußendringen des Schweißmediums aus der Schweißeinrichtung 1 sicher verhindert werden kann, indem die Schweißeinrichtung 1 mit den zu schweißenden Bauteilen 11,12 auf einer Bewegungseinrichtung 15 angeordnet und von einer mit der Bewegungseinrichtung 15 mitbewegbaren Abschirmungseinrichtung 2 umgeben wird, wobei die Bauteile 11,12 während der Bewegung verschweißt werden.

## Beschreibung

Die vorliegende Erfindung betrifft eine Schweißstation bestehend aus zumindest einer Schweißeinrichtung mit zumindest einem Positionier-, Spann- und Schweißmittel zum Positionieren, Spannen und Schweißen von Bauteilen, sowie einer Bewegungseinrichtung und ein Verfahren zum Schweißen von Bauteilen. Weiters wird eine Bearbeitungsstation und eine Fertigungsstraße offenbart in denen eine erfindungsgemäße Schweißstation zum Einsatz kommt.

Beim Schweißen sind Absaugungen bzw. Abschirmungen bekannt, mit der Schweißmedien aus dem Schweißbereich entfernt werden. Die US 5,811,055 A zeigt z.B. eine Abschirmung, die die Schweißeinrichtung umgibt, im Bereich der Schweißstelle gegenüber der Außenwelt abdichtet und mit der Schweißeinrichtung mitbewegt werden kann. Eine solche Einrichtung wird z.B. für Unterwasserschweißungen verwendet. Eine einfache Absaugung ist aus der DE 42 36 236 A1 bekannt, bei der eine Absaugglocke in der Nähe der Schweißstelle positioniert wird und mit der Schweißeinrichtung mitbewegt wird.

Bei Laserschweißstationen oder Laserschweißeinrichtungen ist es aus Sicherheitsgründen zwingend erforderlich und vorgeschrieben, eine Abschirmung vorzusehen, mit der verhindert werden kann, dass Personen im Umfeld dieser Station durch irregeleitete Laserstrahlen verletzt werden können. Dazu werden alle Schweißvorrichtungen der Laserschweißstationen, inklusive eventuell vorhandenen Schweißroboter, vollkommen durch eine entsprechende, hinlänglich bekannte stationäre Abschirmung umgeben. Eine solche stationäre Abschirmung ist natürlich äußerst unflexibel gegenüber Änderungen in der Schweißstation und beansprucht darüber hinaus einen erheblichen Platzbedarf und ist zusätzlich auch noch sehr teuer.
Bisher war eine stationäre Abschirmung immer erforderlich, da im Normalfall die zu verschweißenden Bauteile stationär in einer Schweißstation angeordnet werden und die Schweißeinrichtung an einem Schweißroboter befestigt und mit diesem bewegt wird. D.h. aber, dass es in einer solchen Anordnung mit vertretbarem Aufwand gar keine Alternative zu einer stationären Abschirmung gibt, da der gesamte Schweißbereich abgeschirmt werden muss. Das gleiche gilt natürlich, wenn der Schweißkopf stationär gehalten wird und die Bauteile zum Setzen der Schweißnaht bewegt werden.
Aus der EP 962 278 A2 ist eine Laserschneidanlage bekannt, bei der eine Schutzhaube am verfahrbaren Laserschneidkopf angebracht ist und mit diesem mitbewegt wird, sodass die Laserstrahlen lokal abgeschirmt werden, und die zu schneidenden Bauteile stationär gehalten werden. Zwangsweise kann durch diese Schutzhaube nicht verhindert werden, dass unter Umständen Laserstrahlen nach außen dringen können, da die Schutzhaube zur Aufrechterhaltung der Funktion der Schneidanlage natürlich nicht vollkommen abgeschlossen werden kann, sodass an der Laserschneidanlage zusätzliche Abschirmeinrichtungen vorgesehen werden müssen. Solche zusätzliche Vorrichtungen erhöhen aber natürlich wieder den Aufwand und die Kosten einer solchen Anlage.
Die EP 900 623 A1 wiederum offenbart eine Sicherheitsabschirmvorrichtung einer Laserschneidanlage. Allerdings muss diese Sicherheitsabschirmvorrichtung genau auf die Bleche aufgesetzt werden, um den Laserschneidbereich sicher abzuschirmen. Problematisch wird es allerdings, wenn das Blech Ausnehmungen oder unterschiedliche Breiten aufweist, da dann die sichere Abschirmung unter Umständen nicht mehr gewährleistet werden kann. Das gleiche gilt, wenn der beim Schneiden durch das Blech durchtretende Laserstrahl aus einer Fehlfunktion oder aus einem Defekt an der Anlage durch die Anlage nicht abgeschirmt wird und irregeleitet wird.
Aber nicht nur bei der Verwendung von Laserstrahlen als Schweißmedium ist es zwingender Maßen erforderlich oder erwünscht eine Abschirmung der Schweißstation gegenüber der Außenwelt vorzusehen, wobei für solche Schweißstationen natürlich die gleichen Probleme mit Abschirmungen auftreten wie oben für Laserschweißstationen beschrieben.

Die vorliegende Erfindung hat sich daher die Aufgabe gesetzt, eine betriebssichere, flexible und kostengünstige Schweißstation anzugeben, die die oben angeführten Nachteile einer herkömmlichen Schweißstation beseitigt.

Diese Aufgabe wird erfindungsgemäß dadurch gelöst, dass eine Schweißeinrichtung an einer Bewegungseinrichtung angeordnet und die Schweißeinrichtung mit den Bauteilen mit der Bewegungseinrichtung mitbewegbar ist, die Bauteile während der Bewegung der Bewegungseinrichtung durch das Schweißmittel schweißbar sind und die Schweißeinrichtung eine Abschirmungseinrichtung aufweist, die die Schweißeinrichtung und die Bauteile umgibt und mit der Schweißeinrichtung mitbewegbar ist und die ein Nachaußendringen von Schweißmedien aus der Abschirmungseinrichtung im Wesentlichen verhindert.
Das erfindungsgemäße Schweißverfahren ist dadurch gekennzeichnet, dass zumindest eine Verschlusseinrichtung einer Abschirmungseinrichtung, die eine Schweißeinrichtung umgibt, geöffnet wird, durch die geöffnete Verschlusseinrichtung Bauteile aufgenommen und/oder zugeführt, positioniert und gespannt werden, die Verschlusseinrichtung wieder geschlossen wird, wodurch die Bauteile von der Abschirmungseinrichtung umgeben werden, die Schweißeinrichtung mit den Bauteilen und der Abschirmungseinrichtung mit einer Bewegungseinrichtung bewegt wird und zumindest ein Schweißmittel aktiviert wird und die Bauteile verschweißt werden, während die Schweißeinrichtung bewegt wird.
Dadurch, dass die Schweißeinrichtung mit einer eigenständigen Abschirmeinrichtung aus-gestattet ist, kann auf eine stationäre Abschirmung verzichtet werden. Eine solche Schweißstation kann somit sehr flexibel eingesetzt werden und kann problemlos umpostiert werden, ohne externe Abschirmungen ändern oder umbauen zu müssen.
Die Abschirmung kann außerdem sehr klein und kompakt gehalten werden, da nur die Schweißeinrichtung und nicht die gesamte Laserstation damit umgeben werden muss, was die Kosten einer solchen Schweißstation erheblich senkt.

Um Bauteile einfach und schnell in die Schweißeinrichtung zuführen zu können, ist vorteilhaft in der Abschirmungseinrichtung eine öffen- und verschließbare Verschlusseinrichtung vorgesehen, über die Bauteile in die Schweißeinrichtung zugeführt werden können. Eine solche Verschlusseinrichtung kann einfach gestaltet, z.B. in Form einer Schiebetür oder ähnlichem, und umgesetzt werden.

Zusätzliche externe Einrichtungen zum Bestücken der Schweißeinrichtung entfallen, wenn ein Bauteil von der Schweißeinrichtung eigenständig aufnehmbar ist, was die Kosten der Schweißstation natürlich noch weiter senkt.

Beim Schweißen entstehende gasförmige und/oder feste Stoffe, wie z.B. Staub oder Schweißgase, werden vorteilhaft durch zumindest eine Abführeinrichtung, vorzugsweise eine Absaugeinrichtung, aus der Abschirmungseinrichtung abgeführt, wodurch eine zu starke Verschmutzung des Innenraumes der Abschirmeinrichtung vermieden werden kann, was in Folge wiederum die Serviceintervalle vergrößert und die Betriebskosten der Schweißstation verringert.

Für den Betrieb der Schweißstation erforderliche Medien, wie z.B. Strom, Kühlflüssigkeit, Druckluft, Laserstrahl, etc., werden vorteilhaft zentral über zumindest eine Zuführeinrichtung, z.B. über die Verbindungsstelle zur Handhabungseinrichtung, von außen in die Abschirmeinrichtung zugeführt, was eine gewisse Standardisierung ermöglicht.
Die zum Schweißen erforderliche Laserstrahlen werden dabei sehr günstig mittels geeigneter Lichtwellenleiter zugeführt.

Die Schweißeinrichtung kann sehr kompakt aufgebaut werden, wenn zumindest ein Schweißmittel in einem Spannmittel integriert angeordnet ist. Eine solche Anordnung stellt eine sichere und einfache Möglichkeit zum Schweißen von Bauteilen dar, wobei damit im Wesentlichen nur Punktschweißungen oder kurze Schweißsteps geschweißt werden können.
Alternativ dazu können Schweißmittel auch geführt bewegbar gelagert werden und durch einen Antrieb relativ zur Bewegung der Schweißeinrichtung, vorzugsweise frei im Raum, bewegbar sein. Mit solchen beweglichen Schweißmittel lassen sich natürlich auch komplexe Schweißnähte setzen, wodurch die Bauteil nicht nur punktgeheftet werden können, sondern fertig ausgeschweißt werden können.

Sehr vorteilhaft ist an der Schweißeinrichtung ein Verbindungsmittel vorgesehen, mit welchem die Bewegungseinrichtung mit der Schweißeinrichtung lösbar verbindbar ist. Damit kann die Schweißeinrichtung bei Bedarf sehr einfach gewechselt werden, um z.B. die Schweißeinrichtung zu warten oder durch eine andere auszutauschen.

Um die Funktion der Schweißeinrichtung sicherzustellen ist vorteilhaft eine Steuerungseinheit vorgesehen, wobei unter Umständen auch die Steuerung der Bewegungseinrichtung verwendet werden kann, was die Kosten der Schweißeinrichtung natürlich noch weiter senken würde.

Als Bewegungseinrichtung wird sehr vorteilhaft ein Roboter eingesetzt, der sehr flexibel gesteuert und bewegt werden kann.

Die Wartbarkeit und Umrüstbarkeit der Schweißeinrichtung kann verbessert werden, wenn die Positionier- und/oder Spann- und/oder Schweißmittel auswechselbar in der Schweißeinrichtung angeordnet sind. Damit muss nicht mehr die gesamte Schweißeinrichtung ausgewechselt werden, sondern es können bei Bedarf einzelne Teile oder Teilegruppen daraus gewechselt werden.

Eine solche Schweißstation wird sehr vorteilhaft in einer Bearbeitungsstation zum Fügen von Bauteilen, insbesondere Fahrzeugkarosserieteile, verwendet. Da mit der Schweißstation Bauteile zu Bauteilgruppen gefügt werden können, die in Folge der Bearbeitungsstation zugeführt werden können, können ganze Bearbeitungsstationen, zum Fügen von Bauteilgruppen, durch eine kompakte und flexible Schweißeinrichtung ersetzt werden. Dadurch lässt sich der Flächenbedarf und die Kosten einer solchen Bearbeitungsstation erheblich reduzieren.

Zusätzlich sind in der Bearbeitungsstation vorteilhaft Bauteilzuführeinrichtung vorgesehen, mit der weitere zu fügende Bauteile in die Fügestation zuführbar sind, die mit in einer Schweißstation gefügten Bauteilgruppen in der Fügestation weiter bearbeitbar und/oder fügbar ist.

Die Kosten und der Flächenbedarf einer Fertigungsstraße, vorzugsweise eine Karosseriefertigungsstraße, bestehend aus einer Anzahl hintereinanderfolgender Bearbeitungsstationen kann ebenfalls erheblich reduziert werden.

Die gegenständliche Erfindung wird anhand der beispielhaften und nicht einschränkenden Figuren 1 bis 3 beschrieben, wobei
- Fig. 1: eine schematische Darstellung einer erfindungsgemäßen Schweißeinrichtung und
- Fig. 2 und 3: eine weitere Ausgestaltung einer erfindungsgemäßen Schweißeinrichtung
darstellt.

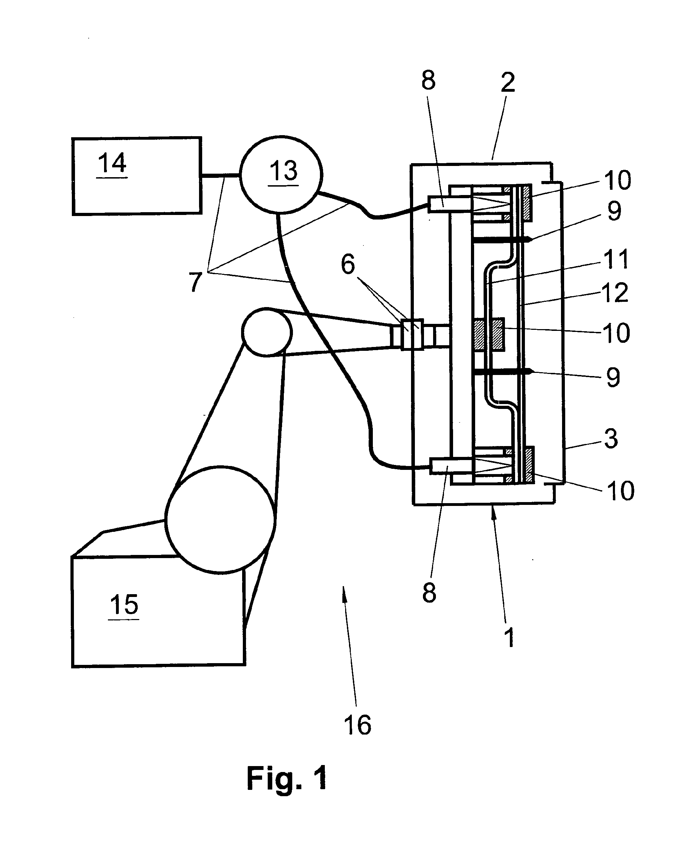

Die Fig. 1 zeigt schematisch eine Laserschweißstation 16 als Schweißstation mit einer Bewegungseinrichtung, hier ein Roboter 15, der über ein Verbindungsmittel 6, hier eine Flanschverbindung, mit einer Laserschweißeinrichtung 1 verbunden ist. Die Laserschweißeinrichtung 1 weist Spann- 10 und Positioniermittel 9 auf, mittels denen Bauteile 11, 12 in der Laserschweißeinrichtung 1 schweißgerecht positioniert und gespannt werden können. Zusätzlich sind in diesem Beispiel Laserschweißmittel 8 in einigen Spannmittel 10 integriert. Die Laserschweißeinrichtung 1 ist vollkommen von einer Abschirmungseinrichtung 2 umgeben, um zu verhindern, dass Laserstrahlen ungewollt nach außen dringen können. Um die Bauteile 11, 12 in die Laserschweißeinrichtung 1 zuführen zu können, ist in der Abschirmungseinrichtung 2 eine Verschlusseinrichtung 3 vorgesehen, die zur Zufuhr von Bauteilen 11, 12 geöffnet werden kann und während des Laserschweißvorganges geschlossen werden sollte, um die Abschirmfunktion sicherzustellen. Die Laserstrahlen werden hier über Lichtwellenleiter 7 der Laserschweißeinrichtung 1 zugeführt. Zur Erzeugung der Laserstrahlen dient eine angedeutete Laserstrahlquelle 14 deren Ausgang hier mittels eines Multiplexers 13 entsprechend verteilt wird. Weitere erforderliche Medien, wie Druckluft oder Elektrizität für die Spann- 10 und Positioniermittel 9, werden im Beispiel nach Fig. 1 über den Roboterarm und der Flanschverbindung 6 zugeführt. Selbstverständlich könnte aber auch eine eigene Zuführeinrichtung an der Laserschweißeinrichtung 1 vorgesehen werden.

Im folgenden wird die bevorzugte Funktionsweise dieser Laserschweißstation 16 beispielhaft beschrieben.
Die Verschlusseinrichtung 3 der Abschirmeinrichtung 2 wird geöffnet, vorzugsweise gesteuert durch die Robotersteuerung, und durch Bewegen des Roboterarmes ein Bauteil 11 selbsttätig aufgenommen, durch Positioniermittel 9 positioniert und durch Spannmittel 10 gespannt, worauf dieser Vorgang mit zumindest einem weiteren Bauteil 12 wiederholt wird. Nachdem alle zu schweißenden Bauteile aufgenommen wurden, wird, vorzugsweise wieder ausgelöst durch die Robotersteuerung, die Verschlusseinrichtung 3 geschlossen und die Laserschweißeinrichtung 1 mit der Abschirmeinrichtung 2 durch den Roboter 15 zu einem bestimmten Ziel, wie beispielsweise eine Bearbeitungsstation, in der die Bauteile weiterbearbeitet werden, bewegt. Während dieser Bewegung werden die Laserschweißmittel 8 aktiviert und die Bauteile 11, 12 lasergeschweißt, sodass diese am Ende der Bewegung fertig gefügt sind und als gefügte Bauteilgruppe in die Bearbeitungsstation zur Weiterbearbeitung übergeben werden können. Dazu wird wiederum die Verschlusseinrichtung 3 geöffnet und die Bauteilgruppe durch den Roboter 15 in der Bearbeitungsstation am vorgesehenen Platz abgelegt, vorzugsweise wiederum gesteuert durch die Robotersteuerung.

Es liegt natürlich im Rahmen der Erfindung, die obigen Arbeitsschritte etwas abzuändern. Z.B. könnten die Bauteile manuell oder durch eine weitere Handhabungseinrichtung, wie z.B. ein Roboter, an die Laserschweißeinrichtung 1 übergeben werden. Gleichfalls wäre es denkbar zwei oder mehrere Bauteile gleichzeitig und nicht sequentiell aufzunehmen, zu positionieren und zu spannen.

Durch eine solche Laserschweißeinrichtung 1, mit in die Spanneinrichtungen 10 integrierten Laserschweißmittel 8, lassen sich vorteilhaft Punktschweißungen durchführen. Wobei es natürlich auch denkbar wäre bei geeigneter Gestaltung der Laserschweißmittel 8, z.B. könnte die Schweißoptik eine eingeschränkte Bewegung des Laserstrahles zulassen, kurze Schweißsteps, also kurze Schweißnähte, zu schweißen.

Die Steuerung der Laserschweißeinrichtung 1 erfolgt in diesem Beispiel durch die Robotersteuerung durch eine geeignete, hinlänglich bekannte Schnittstelle, über die Daten ausgetauscht werden können. Selbstverständlich könnte aber auch eine eigenständige Steuerung der Laserschweißeinrichtung 1 vorgesehen sein, die bei Bedarf mit der Robotersteuerung gekoppelt sein könnte.

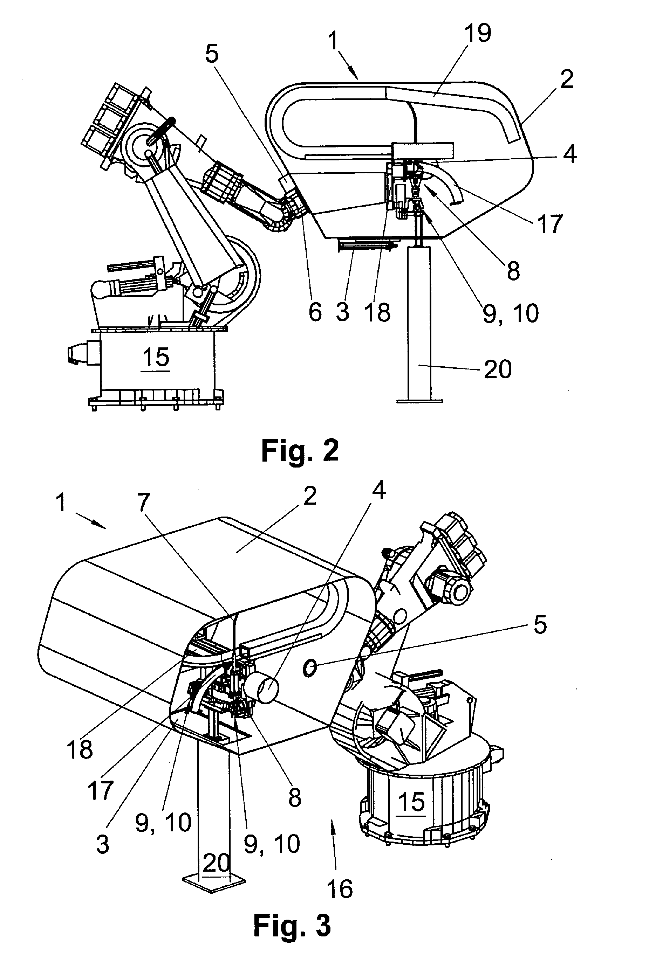

Ein weiteres Ausführungsbeispiel ist der Fig. 2 und 3 zu entnehmen, in der ein Seitenriss und eine dreidimensionale Ansicht einer erfindungsgemäßen Laserschweißeinrichtung 1 gezeigt wird. Die Laserschweißeinrichtung 1 weist wiederum eine Abschirmeinrichtung 2 mit einer Verschlusseinrichtung 3 auf und wird über ein Verbindungsmittel 6 mit einer Bewegungseinrichtung 15, hier ein Roboter, verbunden.
Eine Seitenfläche der Abschirmeinrichtung 2 ist in beiden Figuren transparent dargestellt, um das Innere der Abschirmeinrichtung 2 erkennen zu können. In Realität umgibt die Abschirmeinrichtung 2 natürlich das Laserschweißmittel 8 zur Abschirmung der Laserstrahlen vollkommen.
In der Laserschweißeinrichtung 1 sind wiederum Spann- und Positioniermittel 9, 10 angeordnet mit denen, wie oben beschrieben, hier nicht dargestellte Bauteile aufgenommen, positioniert und gespannt werden können. Das Laserschweißmittel 8 ist hier jedoch auf Führungen 17, 18 angeordnet und ist mittels geeigneter Antriebe, z.B. ein Schlitten der mittels eines Servomotors oder eine Pneumatikzylinders angetrieben wird, im Raum innerhalb der Abschirmeinrichtung 2 relativ zur Bewegung der Laserschweißeinrichtung 1 bewegbar. In diesem Beispiel ist eine lineare Führung 18 und eine bogenförmige Führung 17 vorgesehen, entlang die das Laserschweißmittel 8 bewegt werden kann. Damit lassen sich natürlich auch komplizierte Schweißgeometrien verwirklichen und/oder es können durch entsprechende Positionierung des Laserschweißmittels 8 entlang der Führungen 17, 18 eine Vielzahl von Schweißungen an den Bauteilen während des Transport der Laserschweißeinrichtung 1 durchgeführt werden. Die Gestaltung der Führungen 17, 18 kann dabei natürlich frei gewählt werden und kann an die jeweiligen Anforderungen angepasst werden. Die Funktionsweise dieser Laserschweißeinrichtung 1 ist grundsätzlich wie oben für Fig. 1 beschrieben, gestattet allerdings eine größere Flexibilität beim Laserschweißen, insbesondere können damit natürlich Schweißungen, die über Punktschweißungen oder dem Schweißen von kurzen Steps hinausgehen, durchgeführt werden. Allerdings ist es selbstverständlich auch hier denkbar, zusätzliche stationäre Schweißeinrichtungen in Spanneinrichtungen 10 oder einer anderen beliebigen Stelle der Laserschweißeinrichtung 1 vorzusehen.
Die Bauteile werden wieder über eine Verschlusseinrichtung 3 zugeführt, die im vorliegenden Beispiel geöffnet dargestellt ist. Zur Übernahme der Bauteile ist hier beispielhaft eine Übergabeeinrichtung 20 vorgesehen, auf der die Bauteile angeordnet werden und von der die Bauteile von der Laserschweißeinrichtung 1 selbsttätig aufgenommen werden. Die Verschlusseinrichtung 3 kann natürlich der Größe der zu fügenden Bauteile angepasst werden.
Das Laserschweißmittel 8 wird hier vorteilhaft durch eine eigene Schweißsteuerung angesteuert, die jedoch bei Bedarf mit der Robotersteuerung gekoppelt sein kann.

Zusätzlich ist an der Abschirmeinrichtung 2 der Fig. 2 und 3 ein Abführeinrichtung 4, z.B. eine Absaugung, vorgesehen, über das Schweißgase oder entstehender Staub aus dem Innenraum der Laserschweißeinrichtung 1 abgeführt werden kann.

Die erforderlichen Medien zum Betrieb der Laserschweißeinrichtung 1, wie z.B. Druckluft, Wasser, Elektrizität oder Laserstrahlen, werden hier über eine Zuführeinrichtung 5 zugeführt und in der Laserschweißeinrichtung 1 entsprechend verteilt. Zur Verteilung von Medien ist in Fig. 2 und 3 eine hinlänglich bekannte sogenannte Energiekette 19 angedeutet, die eine ausreichende Bewegungsfreiheit des Laserschweißmittels 8 gewährleistet.

Eine oben beschriebene Laserschweißstation 16 ist natürlich äußerst flexibel und kann sehr platzsparend im Prinzip an einem beliebigen Ort aufgestellt werden, ohne dass stationäre Schutzeinrichtungen angepasst oder neu installiert werden müssten und kann völlig autonom betrieben werden.

In den oben beschriebenen Laserschweißeinrichtungen 1 ist jeweils eine Verschlusseinrichtung 3 vorgesehen. Es ist aber genau so denkbar, mehr als eine Verschlusseinrichtung 3 vorzusehen, um verschiedene Bauteile durch verschiedene Verschlusseinrichtungen 3 zuzuführen bzw. aufzunehmen oder, um mehrere Bauteile gleichzeitig durch verschiedene Verschlusseinrichtungen 3 zuzuführen bzw. aufzunehmen.

Eine Bearbeitungsstation zum Bearbeiten, vorzugsweise Schweißen, von Fahrzeugkarosserien besteht in der Regel aus einer Fügestation, vorzugsweise eine Schweißstation, in der Bauteile miteinander zu Karosserien oder Karosserieteilen verbunden, vorzugsweise verschweißt, werden. Zugeführt werden dabei, mittels geeigneter Handhabungseinrichtungen, wie z.B. Roboter, entweder einzelne Bauteile oder schon vorgefügte Bauteilgruppen, die z.B. in vorgelagerten Fügestationen zusammengefügt worden sind. Zum Vorfügen von Bauteilgruppen kann vorteilhaft eine oben beschriebene Laserschweißstation 16 eingesetzt werden. Dazu wird im Bereich der Fügestation der Bearbeitungsstation eine Laserschweißstation 16 angeordnet, die wie oben beschrieben Bauteile aufnimmt und während der Bewegung selbsttätig schweißt und die fertig gefügte Bauteilgruppe der Fügestation zur Weiterbearbeitung zuführt.
Die Reihenfolge der Schweißungen spielt dabei natürlich keine Rolle, insbesondere können die Schweißungen im Wesentlichen gleichzeitig oder aber auch nacheinander erfolgen, wobei auch eine beliebige Kombination denkbar ist.

Obwohl in der Anmeldung ausschließlich von Laserschweißstationen gesprochen wird, so ist es selbstverständlich ebenfalls denkbar eine solche erfindungsgemäße Schweißstation mit einer vollständigen mobilen Abschirmung auch bei anderen Schweißverfahren, wie z.B. dem Plasmaschweißen oder dem MIG-, MAG-Schweißen, anzuwenden, wenn eine Abschirmung der Schweißmedien gegenüber der Außenwelt erforderlich oder erwünscht ist.
Zusätzlich könnten noch Schweißmittel eingesetzt werden, für die im Normalfall keine eigene Abschirmung gebraucht werden würde, wie beispielsweise ein Widerstandspunktschweißmittel, wie z.B. eine Schweißzange, das gegebenenfalls auch als Spannzange ausgeführt oder auch in ein Spannmittel integriert sein kann. Beispielsweise könnten dadurch entstehende Schweißgase von einem Nachaußendringen abgehalten werden.

Zu beachten ist bei einem erfindungsgemäßen Schweißeinrichtung 1 natürlich das Gewicht, da die Schweißeinrichtung 1 von der Bewegungseinrichtung 15 gehalten und bewegt wird. Das Gewicht der Schweißeinrichtung 1 einschließlich der Bauteile und die Bewegungseinrichtung 15 sollte deshalb aufeinander abgestimmt sein.

## Patentansprüche

1. Schweißstation bestehend aus zumindest einer Schweißeinrichtung (1) mit zumindest einem Positionier- (9), Spann- (10) und Schweißmittel (8) zum Positionieren, Spannen und Schweißen von Bauteilen (11,12), sowie einer Bewegungseinrichtung (15), **dadurch gekennzeichnet, dass** die Schweißeinrichtung (1) an der Bewegungseinrichtung (15) angeordnet und die Schweißeinrichtung (1) mit den Bauteilen (11, 12) mit der Bewegungseinrichtung (15) mitbewegbar sind, dass die Bauteile (11,12) während der Bewegung der Bewegungseinrichtung (15) durch das Schweißmittel (8) schweißbar sind und dass die Schweißeinrichtung (1) eine Abschirmungseinrichtung (2) aufweist, die die Schweißeinrichtung (1) und die Bauteile (11, 12) umgibt und mit der Schweißeinrichtung (1) mitbewegbar ist und die ein Nachaußendringen von Schweißmedien aus der Abschirmungseinrichtung (2) im Wesentlichen verhindert.

2. Schweißstation nach Anspruch 1, **dadurch gekennzeichnet, dass** die Abschirmungseinrichtung (2) eine öffen- und verschließbare Verschlusseinrichtung (3) aufweist, über die Bauteile (11,12) in die Schweißeinrichtung (1) zuführbar sind.

3. Schweißstation nach Anspruch 2, **dadurch gekennzeichnet, dass** zumindest ein Bauteil (11,12) von der Schweißeinrichtung (1) eigenständig aufnehmbar ist.

4. Schweißstation nach einem der Ansprüche 1 bis 3, **dadurch gekennzeichnet, dass** die Schweißeinrichtung (1) zumindest eine Abführeinrichtung (4) aufweist, mit welchem beim Schweißen entstehende gasförmige und/oder feste Stoffe, wie z.B. Staub oder Schweißgase, aus der Abschirmungseinrichtung (2) abführbar sind.

5. Schweißstation nach Anspruch 4, **dadurch gekennzeichnet, dass** die Abführeinrichtung (4) als Absaugeinrichtung ausgeführt ist.

6. Schweißstation nach einem der Ansprüche 1 bis 5, **dadurch gekennzeichnet, dass** die Schweißeinrichtung (1) zumindest eine Zuführeinrichtung (5) aufweist, mit welchem für die Schweißeinrichtung (1) erforderliche Medien, wie z.B. Strom, Kühlflüssigkeit, Druckluft, Laserstrahl, etc., von außen in die Abschirmungseinrichtung (2) zuführbar sind.

7. Schweißstation nach Anspruch 6, **dadurch gekennzeichnet, dass** eine Zuführeinrichtung (5) als Lichtwellenleiter, zur Zufuhr eines Laserstrahles, ausgeführt ist.

8. Schweißstation nach einem der Ansprüche 1 bis 7, **dadurch gekennzeichnet, dass** zumindest ein Schweißmittel (8) in einem Spannmittel (10) integriert angeordnet ist.

9. Schweißstation nach einem der Ansprüche 1 bis 8, **dadurch gekennzeichnet, dass** zumindest ein Schweißmittel (8) geführt bewegbar gelagert ist und durch einen Antrieb relativ zur Bewegung der Schweißeinrichtung (1), vorzugsweise frei im Raum, bewegbar ist.

10. Schweißstation nach einem der Ansprüche 1 bis 9, **dadurch gekennzeichnet, dass** an der Schweißeinrichtung (1) ein Verbindungsmittel (6) vorgesehen ist, mit welchem die Bewegungseinrichtung (15) mit der Schweißeinrichtung (1) lösbar verbindbar ist.

11. Schweißstation nach einem der Ansprüche 1 bis 10, **dadurch gekennzeichnet, dass** eine Steuerungseinheit zum Steuern der Schweißeinrichtung (1) vorgesehen ist.

12. Schweißstation nach Anspruch 11, **dadurch gekennzeichnet, dass** als Steuerungseinheit die Steuerung der Bewegungseinrichtung (15) vorgesehen ist.

13. Schweißstation nach einem der Ansprüche 1 bis 12, **dadurch gekennzeichnet, dass** die Bewegungseinrichtung (15) ein Roboter ist.

14. Schweißstation nach einem der Ansprüche 1 bis 13, **dadurch gekennzeichnet, dass** die Positionier- (9) und/oder Spann- (10) und/oder Schweißmittel (8) auswechselbar in der Schweißeinrichtung (1) angeordnet sind.

15. Schweißstation nach einem der Ansprüche 1 bis 14, **dadurch gekennzeichnet, dass** zumindest ein Schweißmittel (8) ein Laserschweißmittel ist und mit der Abschirmungseinrichtung (2) zumindest das Nachaußendringen von Laserstrahlen verhinderbar ist.

16. Schweißstation nach einem der Ansprüche 1 bis 15, **dadurch gekennzeichnet, dass** zumindest ein Schweißmittel (8) ein Plasmaschweißmittel ist und mit der Abschirmungseinrichtung (2) zumindest das Nachaußendringen von Schweiß- und/oder Schutzgas verhinderbar ist.

17. Schweißstation nach einem der Ansprüche 1 bis 16, **dadurch gekennzeichnet, dass** zumindest ein Schweißmittel (8) ein Widerstandpunktschweißmittel ist.

18. Bearbeitungsstation zum Fügen von Bauteilen, insbesondere Fahrzeugkarosserieteile, mit zumindest einer Schweißstation (16) nach einem der Ansprüche 1 bis 17.

19. Bearbeitungsstation nach Anspruch 18, **dadurch gekennzeichnet, dass** in der Bearbeitungsstation eine Fügestation, vorzugsweise eine Schweißstation (6), und eine Bauteilzuführeinrichtung vorgesehen sind, wobei zu fügende Bauteile (11,12) mit der Bauteilzuführeinrichtung in die Fügestation zuführbar sind.

20. Bearbeitungsstation nach Anspruch 19, **dadurch gekennzeichnet, dass** zumindest eine Bauteilzuführeinrichtung als Schweißstation (16) ausgeführt ist.

21. Bearbeitungsstation nach Anspruch 20, **dadurch gekennzeichnet, dass** mit der Schweißstation (16) eine vorgefügte Bauteilgruppe in die Fügestation zuführbar ist, welche in der Fügestation weiter bearbeitbar und/oder mit einem weiteren Bauteil (11,12) fügbar ist.

22. Fertigungsstraße, vorzugsweise eine Karosseriefertigungsstraße, bestehend aus einer Anzahl hintereinanderfolgender Bearbeitungsstationen, wobei zumindest in einer Bearbeitungsstation eine Schweißstation (16) nach einem der Ansprüche 1 bis 17 angeordnet ist.

23. Fertigungsstraße nach Anspruch 22, **dadurch gekennzeichnet, dass** die Bearbeitungsstation nach einem der Ansprüche 19 bis 21 ausgebildet ist.

24. Verfahren zum Schweißen von Bauteilen, **dadurch gekennzeichnet, dass**
- zumindest eine Verschlusseinrichtung (3) einer Abschirmungseinrichtung (2), die eine Schweißeinrichtung (1) umgibt, geöffnet wird,
- durch die geöffnete Verschlusseinrichtung (3) Bauteile (11,12) aufgenommen und/oder zugeführt, positioniert und gespannt werden,
- die Verschlusseinrichtung (3) wieder geschlossen wird, wodurch die Bauteile (11, 12) von der Abschirmungseinrichtung (2) umgeben werden,
- die Schweißeinrichtung (1) mit den Bauteilen (11, 12) und der Abschirmungseinrichtung (2) mit einer Bewegungseinrichtung (15) bewegt wird und
- zumindest ein Schweißmittel (8) aktiviert wird und damit die Bauteile (11,12) verschweißt werden, während die Schweißeinrichtung (1) bewegt wird.

25. Verfahren nach Anspruch 24, **dadurch gekennzeichnet, dass** das Schweißmittel (8) in der Schweißeinrichtung (1) zum Schweißen relativ zur Bewegung der Schweißeinrichtung (1) bewegt wird.

26. Verfahren nach Anspruch 24 oder 25, **dadurch gekennzeichnet, dass** zumindest ein Bauteil (11,12) selbsttätig von der Schweißeinrichtung (1) aufgenommen wird.

27. Verfahren nach einem der Ansprüche 24 bis 26, **dadurch gekennzeichnet, dass** zumindest ein Bauteil (11,12) in die Schweißeinrichtung (1) zugeführt wird.

28. Verfahren nach einem der Ansprüche 24 bis 27, **dadurch gekennzeichnet, dass** feste und/oder gasförmige Stoffe aus dem Innenraum der Schweißeinrichtung (1) abgeführt werden.
